# EUROPEAN PATENT SPECIFICATION

(11) **EP 0 797 020 B1**
(45) Date of publication and mention of the grant of the patent: **16.10.2002**
(21) Application number: 95941902.9
(22) Date of filing: 26.12.1995
(51) Int. Cl.: F16D 55/40, F15B 11/08

(54) **BRAKE DEVICE FOR A HYDRAULIC MOTOR**
BREMSVORRICHTUNG FÜR EINEN HYDRAULISCHEN MOTOR
DISPOSITIF DE FREIN POUR MOTEUR HYDRAULIQUE

(30) Priority: 27.12.1994 JP 32508694
(43) Date of publication of application: 24.09.1997
(73) Proprietor: KOMATSU LTD., Minato-ku, Tokyo 107-8414 (JP)
(72) Inventor: MARUTA, Kazuhiro, Oyama Factory of Komatsu Ltd., Tochigi-ken 323 (JP)
(74) Representative: Fuchs, Jürgen H., Dr.-Ing.
(86) International application number: PCT/JP95/02701
(87) International publication number: WO 96/020355

(56) References cited:
- EP-A- 0 119 884
- EP-A- 0 567 736
- DE-A- 4 104 712
- JP-A- 2 248 724
- JP-A- 61 006 404
- JP-U- 2 126 933
- JP-U- 61 093 641
- JP-U- 62 100 306

## Description

### TECHNICAL FIELD

The present invention relates to a braking apparatus for a hydraulic motor, which may be a turning purpose hydraulic motor in a hydraulic power shovel or the like.

### BACKGROUND ART

A hydraulic motor has, in general, a shaft rotatably supported in a casing, the said shaft being coupled to a cylinder block which is rotatable therewith. The said cylinder block is formed therein with a plurality of cylinder bores which are thereon circumferentially spaced apart from one another and in parallel to the said shaft. Each of the said cylinder bores has a piston slidably inserted therein, defining a cylindrical chamber with the said piston in a said cylinder bore. Also, the above mentioned shaft has a thrust ball coupled thereto, which in turn has a shoe fittedly inserted therein so as to be inclined with respect to the said shaft by extending along a swash plate. The said thrust ball and the said shoe are designed to be rotatable with the said shaft while being energized towards the above mentioned swash plate by a spring. Further, each of pistons as mentioned above has a front end connected with the said shoe via a universal coupling thereto. And, if the said piston is reciprocated by supplying and draining into and out of a pressure receiving chamber of each said cylinder bore a pressure fluid from a hydraulic pressure source, the above mentioned swash plate and the above mentioned shoe will act to guide the said piston circumferentially to cause the said shaft and the said cylinder block together to be rotated.

Also, a braking apparatus for the above mentioned hydraulic motor has a plurality of movable side frictional plates and a plurality of fixed side frictional plates mounted to the said cylinder block and said housing, respectively, so that they may alternately be mounted one to another in a direction which is parallel to the above mentioned shaft. Opposite to the said frictional plates there is provided a piston that is adapted to be pushed towards a first side or the said frictional plates by a spring and to be pushed towards a second side opposite to the said first side with a pressure fluid in a piston driving pressure receiving chamber. By permitting the said piston to be pushed or thrusted by the said spring to pressure contact the said fixed side frictional plate and the said movable side frictional plates together, the said cylinder block will be brought into a braking state and thus rendered incapable of being rotated, whereas by permitting the said piston driving pressure receiving chamber to be supplied with an increased pressure fluid to cause the said piston to move against the said spring to establish the state in which the said fixed side frictional plates and the said movable side frictional plates are detached one part from another, the said cylinder block will be brought into a non-braking state and thus rendered capable of being rotated.

In such a braking apparatus for a hydraulic motor in which the non-braking state is established by supplying the said piston driving pressure receiving chamber with the increased pressure fluid whereas the braking state is established by draining out the said increased pressure fluid within the said piston driving pressure receiving chamber, it can be seen that the time period in which it is shifted from the non-braking state to the braking state is determined by the distance and the velocity of movement of the said piston, that is, the time period it takes to complete draining the pressure fluid within the piston driving pressure receiving chamber.

And, the said time period it takes to complete draining out the pressure fluid within above mentioned piston driving pressure receiving chamber is determined by a difference between a volume thereof in the said non-braking state and a volume thereof in the said braking state, that is, an effective volume in the said piston driving pressure receiving chamber and a velocity of draining the said high pressure fluid out thereof.

On the other hand, in the case of a turning purpose hydraulic motor for turning an upper vehicle body in a hydraulic power shovel, it has been observed that the said hydraulic motor can only be stopped with some number of rotations due to an inertia of the said upper vehicle body after it is operated to be stopped by returning an operating valve to its neutral position.

For this reason, if the braking apparatus is brought into a braking state at the same time the hydraulic motor is operated so as to be stopped, a braking force applied to the hydraulic motor becomes so large that the hydraulic motor may be damaged and a large shock may then be experienced. In order to avoid such inconveniences, it becomes therefore necessary to bring the braking apparatus into the braking state with some delay after the hydraulic motor is operated so as to be stopped, thus only after ensuring that the hydraulic motor has been completely stopped.

Accordingly, it has hitherto been customary to provide the said piston driving pressure receiving chamber in a pressure fluid supply circuit thereof with a check valve and a slow return valve that is comprised of a construction so that a high pressure fluid may flow smoothly into the daid piston driving pressure receiving chamber to establish the non-braking state in a short period of time but that the said high pressure fluid in the said piston driving pressure receiving chamber may slowly flow out thereof through the said restriction to bring the said braking apparatus slowly into the braking state.

By the way, it should be noted that a said braking apparatus in the prior art has been so constructed that if a braking is not effected, the spacing between a said fixed side frictional plate and a said movable side frictional plate may be regulated by a said piston. Such a braking apparatus is shown in the EP 0 567 736 A1 (which shows a braking apparatus according to the preamble of claim 1). This will cause a difference in position of the said piston between the braking state and the non-braking state (a movement distance of the piston) to be reduced and the effective volume of the said piston to be reduced, thus rendering the above mentioned restriction with an extremely small opening area so that the said piston may move slowly, thus lengthening the time period up to the point at which the braking state is established.

In other words, if the above mentioned piston movement distance is increased, it follows that the spacing between a said fixed side frictional plate and a said movable side frictional plate will be enlaged and a rotation or vibration thereof may cause a backlash of such a frictional plate on either the fixed side or the movable side. This may bring about a state in which the said movable side frictional plate is inclined to fit onto the said cylinder block, and may cause a damage on any such frictional plate in a braking stage and an insufficient braking force. For these reasons, it has hitherto been customary to adopt a small spacing between the said fixed side frictional plate and the said movable side frictional plate.

It has been recognized, however, that with such a measure taken, a machining problem should then develop in fabricating a structure of small restriction with an area of aperture as mentioned above. In addition, a fluctuation in the said area of aperture should then arise from a limit of machining accuracy attainable and a large influence upon the structure from a change in the fluid temperature of the said high pressure flowing should then be also encountered, thus giving rise to an increased fluctuation in the period of time for bringing the braking apparatus into a desired braking state.

It should be noted at this point that the said piston if made greater in diameter will be made greater in its effective volume but will then require the said housing to be made greater, thus eventually enlarging the hydraulic motor proper.

Also, there has hitherto been a proposal to resolve the inconveniences in a case where a slow return valve as mentioned above is utilized, whereby there should be provided an electromagnetic valve that is designed to establish and to block a communication of a said piston driving pressure receiving chamber of the braking apparatus with a hydraulic pressure source and a reservoir, and a controller that is designed to electrically energize the said electromagnetic valve so that if a predetermined period of time elapses after the said controller has been supplied with a signal indicative of the fact that the said hydraulic motor has been operated so as to be stopped, the said electromagnetic valve may be electrically energized to allow the said piston driving pressure receiving chamber to communicate with a said reservoir to bring the said braking apparatus into a desired braking state.

However, such a construction which requires an electromagnetic valve and a controller as mentioned above has been found to be highly costly in its manufacture.

It is, accordingly, an object of the present invention to provide a braking apparatus for a hydraulic motor, which is allowed to shift from a non-braking state slowly to a braking state, which does not require a hydraulic motor to be large sized and which can be made less expensively.

### SUMMARY OF THE INVENTION

In order to achieve the object mentioned above, there is provided in accordance with the present invention, in a first general aspect thereof, a braking apparatus for a hydraulic motor having a housing and a cylinder block, the apparatus comprising: a fixed side frictional plate mounted to the said housing; a movable side frictional plate mounted to the said cylinder block; a piston for pressure contacting the said fixed side frictional plate and the said movable side frictional plate with each other; a spring for thrusting the said piston to move in a first direction tending to establish a first state in which the said two frictional plates are pressure contacted with each other; and a piston driving pressure receiving chamber disposed between the said housing and the said piston for thrusting the said piston to move in a second direction under a high pressure that is introduced into the said piston driving pressure receiving chamber to establish a second state in which the said two frictional plates are detached from each other; and further
a stopper for regulating a spacing between the said fixed side frictional plate and the said movable side frictional plate while the said piston is moving in the said second direction, the said piston being movable in the said second direction from the frictional plate side surface of said stopper by a distance that is greater than the size of the said spacing.

According to the construction mentioned above, it can be seen that it is possible to enlarge the stroke (distance) by which the said piston is moved in a direction in which the said fixed side frictional plate and the said movable side frictional plate are detached from each other without enlarging the spacing between them so as to increase the effective volume in the said piston driving pressure receiving chamber. Thus, since also an increased amount of the pressure fluid have been allowed to flow into the said piston driving pressure receiving chamber in a non-braking stage, it will take a longer time for the pressure fluid to flow out of the said piston driving pressure receiving chamber and it will then proportionally take a longer time for a braking state to be reached. Also, since the effective volume in the said piston driving pressure receiving chamber is made greater, it will become unnecessary to much reduce the area of the said restriction. For example, it is possible to use an orifice restriction of a diameter not less than 0.5 mm, thus permitting the fluctuation in the time period before a braking state is reached to be minimized. Further, because the said piston needs not be large in diameter, the hydraulic motor proper will not be large sized.

In the construction mentioned above, it should be noted that it is preferred that there should be provided: a directional control valve for supplying the hydraulic motor with a pressure fluid and a sensing circuit connected to said piston driving pressure receiving chamber for detecting a load pressure from the said directional control valve and permitting the said piston to be driven under the said load pressure.

Also, in the construction mentioned above, it is possible that there may be provided a directional control valve for supplying the hydraulic motor with a pressure fluid and a hydraulic pilot valve having an output side connected to the said piston driving pressure receiving chamber for switching the said directional control valve with a pilot pressure fluid that is furnished therefrom and permitting the said piston to be driven under the said pilot pressure.

According to each of the constructions mentioned in the preceding paragraphs, it can be seen that the use of a said load pressure or a said pilot pressure makes it unnecessary to include a switching valve and so forth, and allows the apparatus to be manufactured less costly.

### BRIEF EXPLANATION OF THE DRAWINGS

The present invention will better be understood from the following detailed description and the drawings attached hereto showing certain illustrative embodiments of the present invention. In this connection, it should be noted that such embodiments as illustrated in the accompanying drawings are intended in no way to limit the present invention but to facilitate an explanation and understanding thereof.

In the accompanying drawings:
Fig. 1 is a longitudinal cross sectional view that shows a hydraulic motor incorporating a first embodiment of the braking apparatus according to the present invention;
Fig. 2 is a cross sectional view taken along the line II - II in Fig. 1;
Fig. 3 is a cross sectional view taken along the line III - III in Fig. 1;
Fig. 4 is a hydraulic circuit that shows the above mentioned first mentioned embodiment of the present invention; and
Fig. 5 is a hydraulic circuit diagram that shows a second embodiment of the braking apparatus according to the present invention.

### BEST MODES FOR CARRYING OUT THE INVENTION

Hereinafter, suitable embodiments of the present invention with respect to a braking apparatus for a hydraulic motor will be set forth with reference to the accompanying drawings hereof.

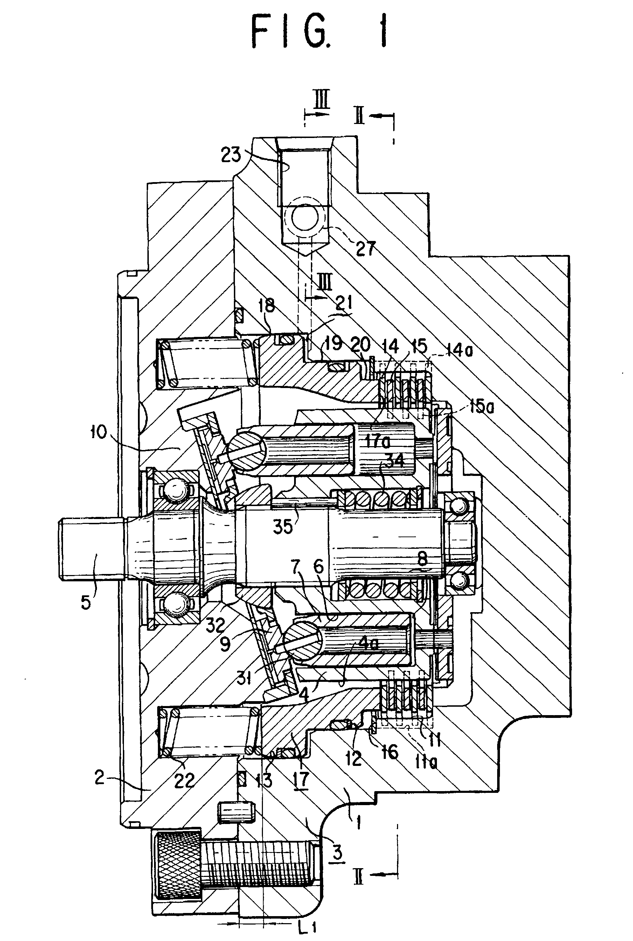

As shown in Fig. 1, a cylindrical casing 1 and an end plate 2 are joined together to constitute a motor housing 3 in which a shaft 5 is supported as rotatable. A cylinder block 4 is spline coupled to the said shaft 5 so as to be rotatable therewith. The said cylinder block 4 is formed with a plurality of cylindrical bores 6 spaced apart from one another circumferentially thereof and each extending in parallel to the said shaft 5. Each of the said cylindrical bores 6 has a piston 7 slidably inserted therein. Also, the said shaft 5 has a thrust ball 32 spline coupled thereto, which in turn has a shoe 9 fitted thereon that is inclined with respect to the said shaft 5 by extending along a swash plate 10 so that the said thrust ball 32 and the said shoe 9 are rotatable together with the said shaft 5. In addition, a spring 34 and a pin 35 are interposed between the said thrust ball 32 and the said cylinder block 4 to energize the said thrust ball 32 and the said shoe 9 towards the said swash plate 10. Also, each said piston 7 has its forward end that is universal coupled to the said shoe 9 via a ball 31. And, by supplying into and draining out of a pressure receiving chamber 8 in each said cylindrical bore 6 a pressure fluid from a hydraulic fluid source not shown to reciprocate the said piston 7, the said swash plate 10 and the said shoe 9 together will act to guide the said piston 7 circumferentially so as to rotate the said shaft 5 as well as the said cylinder block 4. It is with these components that a hydraulic motor is basically constituted.

Also, the inner surface of the above mentioned casing 1 is of a stepped configuration having a small diameter inner surface 11, a middle diameter inner surface 12 and a large diameter inner surface 13. The said small diameter inner surface 11 and the outer surface 4a of the said cylinder block 4 have a plurality of fixed side frictional plates 14 and a plurality of movable side frictional plates 15 mounted thereto, respectively, so that they may be arranged alternately in a direction in parallel to the said shaft 5 and may not be rotated.

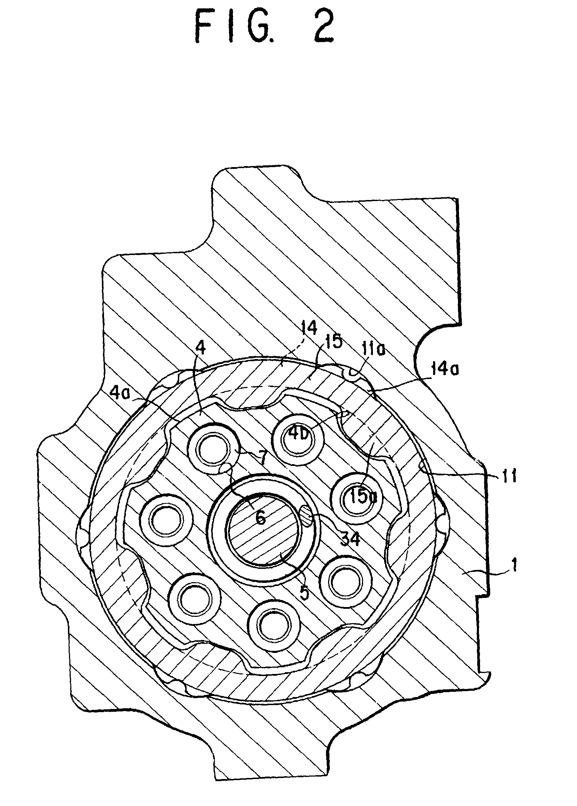

For example, as shown in Fig. 2, the said small diameter inner surface 11 is formed circumferentially thereof with a plurality of recesses 11a spaced apart from one another whereas the said outer surface 4a of a said fixed side frictional plate 14 is formed circumferentially thereof with a plurality of projections 14a which are spaced from one another and are fitted in the said recesses 11a, respectively. Further, the outer surface 4a of the said cylinder block 4 is formed circumferentially thereof with a plurality of recesses 4b spaced apart from one another whereas the inner surface of a said movable side frictional plate 15 is formed circumferentially thereof with a plurality of projections 15a which are spaced apart and are fitted in the said recesses 4b, respectively.

The middle diameter inner surface 12 of the above mentioned casing 1 has mounted thereto a ring shaped stopper 16 such as a snap ring which serves to regulate the spacing between a said fixed side frictional plate 14 and a said movable side frictional plate 15 so as to be small.

The said piston 17 is slidably accommodated within a space defined by the said large diameter inner surface 13, the said middle diameter inner surface 12 and the said small diameter inner surface 11, and is of a hollow stepped configuration having a large diameter base portion 18, a middle diameter intermediate portion 19 and a small diameter forward end portion 20 which are commensurate with the said large diameter inner surface 13, the said middle diameter inner surface 12 and the said small diameter inner surface 11, respectively. And, the large diameter base portion 18 and the said middle diameter intermediate portion 19 of the said piston 17 are slidably inserted into the said large diameter inner surface 13 and the said middle diameter inner surface 12 to define a piston driving pressure receiving chamber 21. The said small diameter forward end portion 20 is smaller in diameter than the said ring stopper 16.

A spring 22 is disposed between the above mentioned end plate 11 and the above mentioned piston 17, and is provided to thrust the said piston 17 rightwards to allow the said small diameter forward end portion 20 to be projected from the said stopper 16 towards the said frictional plate side and then to pressure contact the said fixed side frictional plates 14 and the said movable side frictional plates 15 together. This will cause the said cylinder block 4 to be fastened to the said housing 3, thereby bringing about a braking state, the state in which the said cylinder block 4 is braked. On the other hand, if a high pressure fluid is introduced into the said piston driving pressure receiving chamber 21, the said piston 17 will be thrusted leftwards against the said spring 22 to detach the said fixed side frictional plates 14 from the said movable side frictional plates 15. This will cause the said cylinder block 4 to be released from braking and a non-braking state therefor to be established.

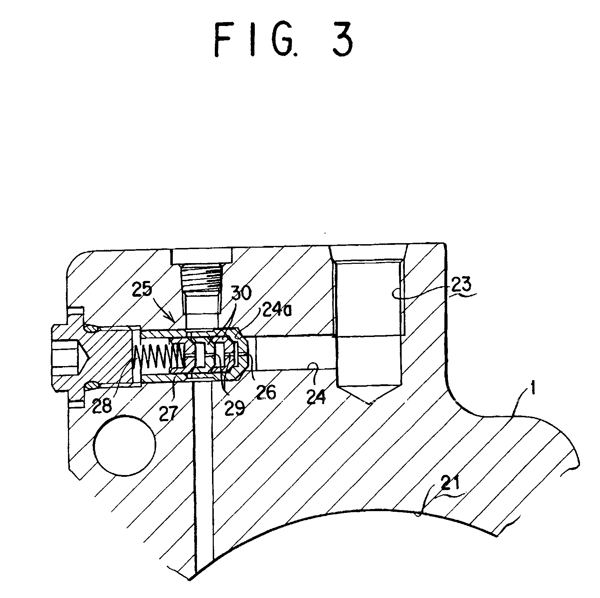

The above mentioned casing 1 is formed therein with a port 23 which is, as shown in Fig. 3 of the drawings attached hereto, allowed to communicate via a fluid bore 24 with the above mentioned piston driving pressure receiving chamber 21. The said fluid bore 24 is provided with a slow return valve 25 which is configured to cause a poppet 27 having a narrow bore 26 to be thrusted by a spring 28 against a valve seat 24a in the said fluid bore 24. Further, there are successively inserted into the said poppet 27, a plurality of auxiliary poppets 30 each of which is formed therein with a narrow bore 29. In such a construction, the high pressure fluid flowing from the said port 23 will act to forcibly open the said poppet 27 and the auxiliary poppets 30 so as to flow smoothly into the said piston driving pressure receiving chamber 21. The high pressure fluid having so flown into the said piston driving pressure receiving chamber 21 is here designed to to slowly flow then out thereof into the said port 23 via the said narrow bores 29 and 26. It is with these components that the braking apparatus is constituted.

With the braking apparatus being so constructed, if the said piston driving pressure receiving chamber 21 is supplied with the high pressure fluid, then the said piston 17 will be moved against the said spring 22 and moved in a direction in which the forward end face 17a of the said piston 17 departs from the end positioned fixed side frictional plate 14 and reaches the position leftwards of the said stopper 16. In this case, the piston 17 is moved by a distance L that is so long.

With the distance of movement of the said piston being thus so long, it can be seen that the said piston driving pressure receiving chamber 21 will have an increased effective volume therein. Thus, since an increased amount of the fluid per unit time will flow out of the said piston driving pressure receiving chamber 21 when the said piston 17 is thrusted by the said spring 22 to bring about a braking state, it follows that the braking apparatus will be brought slowly into a braking state as a result of an elongated period of time elapsed until the said fixed side frictional plates 14 and the said movable side frictional plates 15 are pressure contacted together if the area of opening of the restriction (narrow bores) in the said slow return valve 25 is increased.

Also, in the non-braking stage it may be noted that the said front end surface 17a of the piston 17 is far removed from the said end positioned fixed side frictional plate 14. It should be noted, however, that there will then be no backlash brought about either on a said fixed side frictional plate 14 or on a said movable side frictional plate 15 since the spacing between the said two frictional plates 14 and 15 will be held at a minimum.

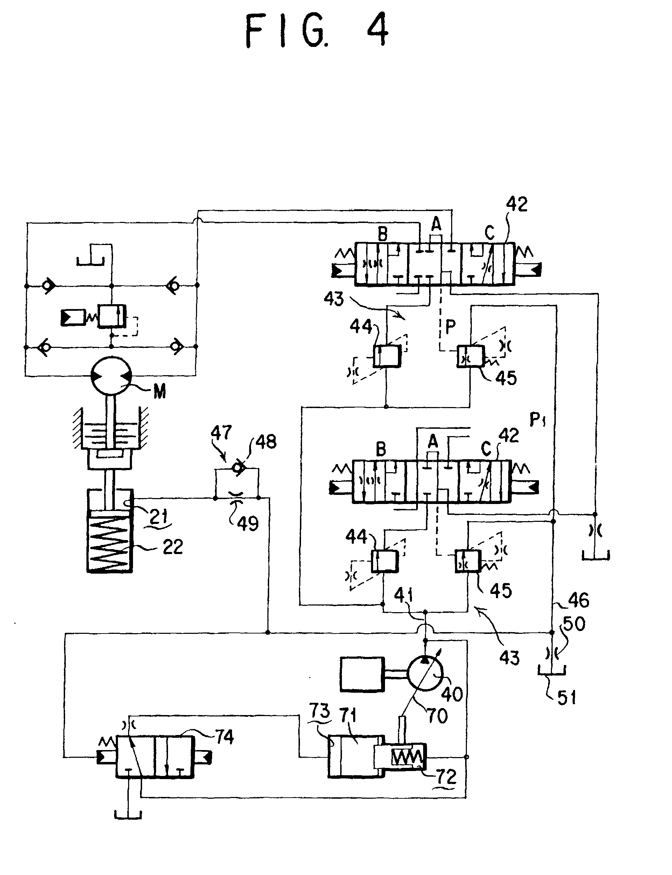

Fig. 4 of the drawings attached hereto shows a hydraulic circuit diagram of a first embodiment of the present invention as mentioned above. In the Figure, a hydraulic pump 40 has its discharge path 41 that is connected to a plurality of directional control valves 42 arranged in parallel to one another and that is designed to feed a pressure fluid into an actuator, e. g., a turning purpose hydraulic motor M and an operating machine cylinder not shown. Each of the said directional control valves 42 is provided at an inlet side thereof with a pressure compensating valve 43 associated respectively therewith, which having a check valve 44 and a pressure reduction valve 45 is of the conventional design and is adapted to perform, with a load pressure Pₒ of an actuator and a load pressure P₁ of a load pressure detecting circuit 46 corresponding thereto, a pressure compensating operation. It should be noted at this point that the said load pressure detecting circuit 46 is designed to have a maximum load pressure introduced therein when a plurality of actuators are simultaneously operated.

The above mentioned load pressure detecting circuit 46 is connected via a hydraulic timer 47 to the said piston driving pressure receiving chamber 21 for the said hydraulic motor M. The said hydraulic timer 47 is constructed of a check valve 48 and a restriction 49 such that a load pressure of the said load pressure detecting circuit 46 may smoothly be introduced into the said piston driving pressure receiving chamber 21 but that the pressure fluid in the said piston driving pressure receiving chamber 21 may slowly flow out thereof. It should be noted in this connection that the said load pressure detecting circuit 46 is connected via a restriction 50 to a reservoir 51.

With the hydraulic circuit in the first embodiment being constructed in this fashion, it may be noted that when none of the said directional control valves 42 is operated (i. e., each in its neutral position A), no load pressure will be generated in the said load pressure detecting circuit 46 and, as a result, the pressure in the said piston driving pressure receiving chamber 21 will be reduced approximately to zero. Hence, the braking apparatus will be brought into a braking state to allow the said turning purpose hydraulic motor M to be braked.

When one or another of the said directional control valves 42 is operated (i. e., taking a first or a second pressure supply position B or C), a load pressure will be introduced into the said load pressure detecting circuit 46 and will then be supplied into the said piston driving pressure receiving chamber 21, thus bringing the braking apparatus into a non-braking state.

Thus, with the use of the construction in which the braking apparatus is brought into a non-braking state by utilizing a load pressure that is detected when a said directional control valve 42 is operated, the braking apparatus will automatically be brought into a non-braking state whenever the turning purpose hydraulic motor M is rotated or whenever a working machine cylinder not shown is operated, and the braking apparatus will automatically be brought into a braking state whenever the said hydraulic motor is not rotated or whenever the said working machine cylinder is not operated. It follows therefore that it becomes unnecessary to provide either a switching valve or a controller that is designed to bring the braking apparatus selectively into a braking state and a non-braking state.

It should be noted here that it is for the purpose of hydraulically holding the upper body of a hydraulic power shovel when it is engaged in its offset excavating operation that the braking apparatus is brought into a non-braking state when a working machine cylinder is operated.

More specifically, it is the reason why this is so that a hydraulic power shovel is in general provided on a lower vehicle body thereof with an upper body which is turnable with a turning purpose hydraulic motor and on which an excavating machine comprising a boom, an arm and a bucket is mounted so that each of them may be turnable upwards and downwards with a working machine cylinder. Thus, an excessive torque of rotation may act on the said upper body in an offset excavating stage. Then, if the braking apparatus is in a braking state, a large force will act on the said hydraulic motor (including a reduction gear assembly), possibly causing a damage on the hydraulic motor or the reduction gear assembly and generating other problems including the emission of an abnormal sliding sound. This has hitherto necessitated hydraulically supporting the said upper body by bringing the braking apparatus into a non-braking state.

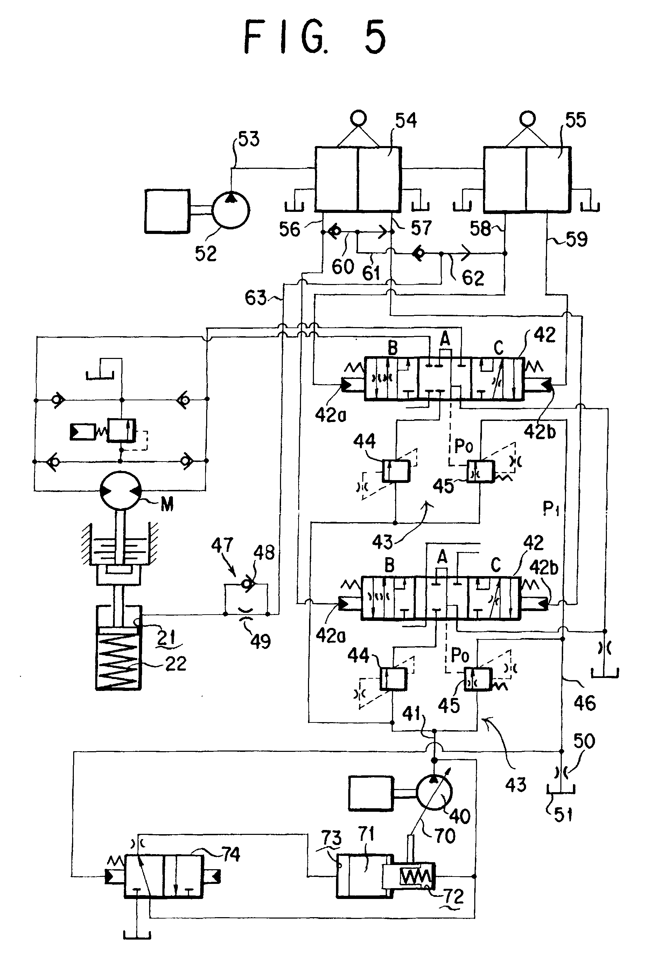

Fig. 5 shows a hydraulic circuit of a second embodiment of the braking apparatus according to the present invention. In this case, a pilot pressure pump 52 has its discharge path 53 which is provided with a turning purpose hydraulic pilot valve 54 and a working machine hydraulic pilot valve 55. The said hydraulic pilot valve 54 has a first and a second output circuit 56 and 57 which are connected respectively to a first and a second pressure receiving portion 42a and 42b of one directional control valve 42 whereas the said hydraulic pilot valve 55 has a third and a fourth output circuit 58 and 59 which are connected respectively to a first and a second pressure receiving portion 42a and 42b of the other directional control valve 42.

Further, it should be noted that a high pressure fluid (i. e. a pilot pressure fluid) in the first and second output circuits 56 and 57 mentioned above is adapted to be detected at a first shuttle valve 60 by a first sensing circuit 61, and a high pressure fluid in the said first sensing circuit 61 and the said third output circuit 58 is adapted to be detected at a second shuttle valve 62 by a second sensing circuit 63, the second sensing circuit 63 being connected via a hydraulic timer 47 to the said piston driving pressure receiving chamber 21 in the braking apparatus.

With the second embodiment of the invention being so constructed, it can be seen that when the said turning purpose hydraulic pilot valve 54 is operated to rotate the said hydraulic motor in both normal and reverse rotary directions to furnish the said first and second output circuits 56 and 57 with a pilot pressure fluid or when the said working machine hydraulic pilot valve 55 is operated in one direction for an excavation to furnish the said third output circuit 58 with a pilot pressure, the said second sensing circuit 63 will be furnished with the pilot pressure fluid, thereby furnishing a pressure fluid into the said piston driving pressure receiving chamber 21 to bring the braking apparatus into a non-braking state. Therefore, the operation and effect as in the previously mentioned first embodiment will be achievable here, too.

In the arrangements shown in Figs. 4 and 5, the said hydraulic pump is constructed to be of a variable capacity type in which its capacity is controlledly increased and decreased by swinging a swash plate 70 with a control piston 71. The said control piston 71 is adapted to be slidable in the capacity increasing and decreasing directions by a self discharge pressure that is supplied into a small diameter pressure receiving chamber 72 and a large diameter pressure receiving chamber 73. A control valve 74 allows the self discharge pressure to be supplied into the said large diameter pressure receiving chamber 73 and is so constructed that it may be switchably operated by both the load pressure and the self discharge pressure.

As set out in the foregoing description, it will be appreciated that according to the present invention, by virtue of the fact that the piston driving pressure receiving chamber 21 has an increased effective volume and an increased amount of pressure fluid is allowed to flow into the said piston driving pressure receiving chamber 21 in a non-braking stage, it follows that it will take a time for the pressure fluid within the said piston driving pressure receiving chamber 21 to flow out thereof and it will then proportionally take longer a time before a braking state is reached.

Therefore, it can be seen that if the area of opening of the said restriction 49 which constitutes the said hydraulic timer 47 is increased and the said piston 17 is reduced in diameter, the braking apparatus is allowed to shift from a non-braking state slowly to a braking state. As a result, the period of time before a braking state is reached is rendered less fluctuated and the hydraulic motor proper is never large sized.

It can also be seen that a braking apparatus according to the present invention makes use of a load pressure or a pilot pressure for switching from a braking state to a non-braking state and vice versa, and hence makes a switching valve and so forth unnecessary to this end and results in a reduced cost of its manufacture.

## Claims

1. A braking apparatus for a hydraulic motor having a housing (3) and a cylinder block (4), the apparatus comprising:
a fixed side frictional plate (14) mounted to said housing (3),
a movable side frictional plate (15) mounted to said cylinder block (4), a piston (17) for pressure contacting said fixed side frictional plate (14) and said movable side frictional plate (15) with each other,
a spring (22) for thrusting said piston (17) to move in a first direction tending to establish a first step in which the two frictional plates (14, 15) are pressure contacted with each other,
a piston driving pressure receiving chamber (21) disposed between said housing (3) and said piston (17) for thrusting said piston (17) to move in a second direction under a high pressure that is introduced into said piston driving pressure receiving chamber (21) to establish a second state in which said two frictional plates (14, 15) are detached from each other;
a stopper (16) for regulating a spacing between said fixed side frictional plate (14) and said movable side frictional plate (15) while said piston (17) is moving in said second direction and the apparatus is **characterized in that** said piston (17) is movable in said second direction from the frictional plate side surface of said stopper (16) by a distance that is greater than the size of said spacing.

2. A braking apparatus for a hydraulic motor, as set forth in claim 1, in which there are provided: a directional control valve for supplying the hydraulic motor with a pressure fluid and a sensing circuit connected to said piston driving pressure receiving chamber (21) for detecting a load prssure from said directional control valve (74) and permitting said piston (17) to be driven under said load pressure.

3. A braking apparatus for a hydraulic motor, as set forth in claim 1, in which there are provided a directional control valve for suplying the hydraulic motor with a pressure fluid and a hydraulic pilot valve having an output side connected to said piston driving pressure receiving chamber (21) for switching said directional control valve (74) with a pilot pressure fluid that is furnished therefrom and permitting said piston (17) to be driven under said pilot pressure.

## Patentansprüche

1. Bremsvorrichtung für einen Hydraulikmotor mit einem Gehäuse (3) und einem Zylinderblock (4), wobei die Vorrichtung umfaßt:
- eine starre Seiten-Reibungsplatte (14), die mit dem Gehäuse (3) montiert ist,
- eine bewegliche Seiten-Reibungsplatte (15), die mit dem Zylinderblock (4) montiert ist,
- einen Kolben (17) zum Druckkontakt der starren Seiten-Reibungsplatte (14) und der beweglichen Seiten-Reibungsplatte (15) miteinander,
- eine Feder (22) zum Stoßen des Kolbens (17) und zur Bewegung in einer ersten Richtung und mit dem Bestreben, einen ersten Zustand zu bilden, bei dem die zwei Reibungsplatten (14, 15) sich in Druckkontakt miteinander befinden,
- eine Kolbenantriebs-Druckaufnahmekammer (21), die zwischen dem Gehäuse (2) und dem Kolben (17) angeordnet ist, um den Kolben (17) anzustoßen und in einer zweiten Richtung unter einem hohen Druck zu bewegen, der in die Kolbenantriebs-Druckaufnahmekammer (21) eingeführt wird, um einen zweiten Zustand zu bilden, bei welchem die zwei Reibungsplatten (14, 15) voneinander gelöst sind,
- ein Stopelement (16) zum Regeln eines Abstandes zwischen der starren Seiten-Reibungsplatte (14) und der beweglichen Seiten-Reibungsplatte (15), während sich der Kolben (17) in die zweite Richtung bewegt, und wobei die Vorrichtung **dadurch gekennzeichnet ist, daß** der Kolben (17) in der zweiten Richtung von der Reibplatten-Seitenoberfläche des Stopelementes (16) um eine Distanz beweglich ist, die größer als die Abmessung des Abstandes ist.

2. Bremsvorrichtung für einen Hydraulikmotor wie im Patentanspruch 1 wiedergegeben, bei welcher vorgesehen sind: Ein Richtungs-Steuerventil zur Versorgung des Hydraulikmotors mit einem Druckfluid und ein mit der Kolbenantriebs-Druckaufnahmekammer (21) verbundener Erfassungsschaltkreis zur Feststellung eines Lastdruckes von dem Richtungs-Steuerventil (74) und zur Gestattung des Antriebes des Kolbens (17) unter diesem Lastdruck.

3. Bremsvorrichtung für einen Hydraulikmotor wie im Patentanspruch 1 wiedergegeben, bei welcher vorgesehen sind, ein Richtungs-Steuerventil zur Versorgung des Hydraulikmotors mit einem Druckfluid und ein Hydraulik-Pilotventil mit einer Ausgangsseite, die an die Kolbenantriebs-Druckaufnahmekammer (21) angeschlossen ist, um das Richtungs-Steuerventil (74) mit einem Pilotdruckfluid zu schalten, das von diesem geliefert wird, und um dem Kolben (17) zu gestatten, durch diesen Pilotdruck angesteuert zu werden.

## Revendications

1. Appareil de freinage pour un moteur hydraulique ayant un carter (3) et un bloc cylindres (4), l'appareil comprenant :
une plaque de friction (14) du côté fixe montée sur ledit carter (3),
une plaque de friction (15) du côté mobile montée sur ledit bloc cylindres (4),
un piston (17) pour mettre en contact par compression ladite plaque de friction (14) du côté fixe et ladite plaque de friction (15) du côté mobile l'une avec l'autre,
un ressort (22) pour pousser ledit piston (17) pour qu'il se déplace dans une première direction tendant à établir une première étape dans laquelle les deux plaques de friction (14, 15) sont mises en contact l'une avec l'autre par compression,
une chambre (21) recevant la pression d'entraînement du piston, disposée entre ledit carter (3) et ledit piston (17) pour pousser ledit piston (17) pour qu'il se déplace dans une deuxième direction sous une pression élevée qui est introduite dans ladite chambre (21) recevant la pression d'entraînement du piston afin d'établir un deuxième état dans lequel lesdites deux plaques de friction (14, 15) sont détachées l'une de l'autre;
une butée (16) pour réguler un espacement entre ladite plaque de friction (14) du côté fixe et ladite plaque de friction (15) du côté mobile, pendant que ledit piston (17) se déplace dans ladite deuxième direction et l'appareil est **caractérisé en ce que** ledit piston (17) est mobile dans ladite deuxième direction à partir de la surface du côté de la plaque de friction de ladite butée (16) d'une distance qui est supérieure à la taille dudit espacement.

2. Appareil de freinage pour un moteur hydraulique, selon la revendication 1, dans lequel il est prévu : une soupape de commande directionnelle pour alimenter le moteur hydraulique en un fluide de pression et un circuit capteur connecté à ladite chambre (21) recevant la pression d'entraînement du piston, pour détecter une pression de charge provenant de ladite soupape de commande directionnelle (74) et permettant audit piston (17) d'être entraîné sous ladite pression de charge.

3. Appareil de freinage pour un moteur hydraulique, selon la revendication 1, dans lequel il est prévu une soupape de commande directionnelle pour alimenter le moteur hydraulique en un fluide de pression et une soupape pilote hydraulique ayant un côté de sortie connectée à ladite chambre (21) recevant la pression d'entraînement du piston en vue de commuter ladite soupape de commande directionnelle (74) avec un fluide de pression pilote qui est fourni de celle-ci et permettant audit piston (17) d'être entraîné sous ladite pression pilote.
